Europäisches Patentamt

European Patent Office

Office européen des brevets

(19)

(11) Numéro de publication : **0 320 392 B1**

# (12) FASCICULE DE BREVET EUROPEEN

(45) Date de publication du fascicule du brevet :
16.10.91 Bulletin 91/42

(51) Int. Cl.⁵ : **B29C 51/16**

(21) Numéro de dépôt : 88403125.3

(22) Date de dépôt : 09.12.88

(54) **Installation de thermoformage simultané d'au moins une rangée de récipients en matière thermoplastique munis chacun d'une banderole décorative.**

(30) Priorité : 11.12.87 FR 8717355

(43) Date de publication de la demande :
14.06.89 Bulletin 89/24

(45) Mention de la délivrance du brevet :
16.10.91 Bulletin 91/42

(84) Etats contractants désignés :
CH DE ES GB IT LI

(56) Documents cités :
FR-A- 2 034 915
FR-A- 2 340 191
FR-A- 2 425 926
FR-A- 2 454 892
FR-A- 2 595 976
FR-A- 2 599 668

(73) Titulaire : ERCA HOLDING
Zone Industrielle de Courtaboeuf Avenue du
Pacifique
F-91942 Les Ulis Cédex (FR)

(72) Inventeur : Hautemont, Jean-Claude
18 Domaine de Miremont
F-91190 Gif-sur-Yvette (FR)

(74) Mandataire : Hasenrader, Hubert et al
Cabinet BEAU DE LOMENIE 55, rue
d'Amsterdam
F-75008 Paris (FR)

EP 0 320 392 B1

# Description

La présente invention concerne une installation de thermoformage simultané d'au moins une rangée de récipients en matière thermoplastique dont les récipients sont munis chacun d'une banderole décorative, installation du type comportant :

— d'une part, un poste de thermoformage à travers lequel passe pas à pas une bande thermoplastique préchauffée à sa température de formage, et qui comprend, en dessous du trajet de ladite bande thermoplastique, un bloc de moulage muni d'une pluralité de chambres cylindriques verticales de formage disposées en au moins une rangée transversale par rapport à la direction horizontale d'avancement pas à pas de la bande thermoplastique, ouvertes vers le haut et présentant, à leur extrémité inférieure, une ouverture susceptible d'être fermée par un élément de fond mobile par rapport au bloc de moulage de façon à être coiffé par la chambre de formage correspondante dudit bloc de moulage qui repose sur un plateau de presse verticalement mobile entre une position haute dite de thermoformage et une position basse dite de démoulage des récipients, et

— d'autre part, un dispositif de découpe, de préformage et de transfert des banderoles dans les chambres de formage du bloc de moulage, ce dispositif comprenant de l'amont vers l'aval dans le sens de déplacement des banderoles :

— un rouleau de support d'une bobine de bandemère monté, de part et d'autre de ladite bobine, dans des paliers,

— une unité de découpe longitudinale de la bande-mère en bandes individuelles prévue sur un bâti de support écarté latéralement du bloc de moulage,

— au moins un rouleau de guidage à position réglable pour chacune des bandes individuelles,

— une unité de préenroulement des banderoles décoratives, unité présentant dans un bloc de support qui est disposé en dessous du bloc de moulage :

a) une pluralité de chambres cylindriques verticales de préenroulement alignées chacune avec l'une des chambres de formage de sorte que la paroi verticale de chaque chambre de préenroulement délimite un pourtour homothétique à celui de la chambre de formage, mais légèrement inférieur au pourtour de celle-ci, de façon à constituer, par son bord supérieur, un épaulement annulaire de retenue qui délimite en même temps l'ouverture de fond de la chambre de formage,

b) un organe conformateur dont la tige traverse la chambre de préenroulement et forme avec la paroi verticale de celle-ci une chambre annulaire étroite de guidage et de préenroulement et dont la partie supérieure, d'une part, constitue au moins une partie de la plaque de fond et présente une section transversale de forme analogue, mais inférieure à celle de la paroi verticale de la chambre de formage de sorte que la distance entre la paroi verticale de la chambre de formage et la face périphérique de l'extrémité supérieure du conformateur soit au moins égale à l'épaisseur d'une banderole, et, d'autre part, est susceptible de pénétrer dans la chambre de formage et appliquer et maintenir appliquée ladite banderole contre la paroi latérale verticale de ladite chambre de formage,

c) une pluralité de fentes verticales d'accès dont chacune est ménagée dans une paroi latérale délimitant une partie des chambres de préenroulement et débouche obliquement dans une desdites chambres de préenroulement prévues dans ledit bloc de support et,

d) un organe de transfert prévu dans la chambre annulaire de préenroulement et de guidage, solidaire de la partie inférieure de la tige de l'organe conformateur et susceptible de supporter la banderole jusqu'à ce que celle-ci ait été transférée à la chambre de formage par un mouvement relatif entre ledit organe de transfert et ladite chambre de formage, et

— une unité d'introduction et de découpe transversale de banderoles présentant :

a) une pluralité de couteaux susceptibles de coopérer chacun avec une contre-lame pour découper transversalement l'extrémité arrière de la banderole introduite au moins partiellement dans la chambre de préenroulement correspondante,

b) une pluralité de paires de rouleaux d'introduction d'axes parallèles aux fentes verticales d'introduction et disposées chacune en amont d'un couteau et d'une fente d'introduction et susceptibles d'entraîner la bande individuelle pincée entre ses deux rouleaux d'un pas égal à la longueur d'une banderole,

c) des moyens de commande pour faire tourner les rouleaux d'introduction et actionner séquentiellement les couteaux de découpe transversale, et

d) un chariot de support mobile horizontalement, parallèlement au plan comprenant les axes des chambres d'une rangée de chambres de formage et perpendiculairement à la direction d'avancement de la bande thermoplastique au droit du poste de formage et portant les couteaux de découpe transversale, les paires de rouleaux d'introduction et les moyens de commande de ceux-ci.

Une telle installation de thermoformage est, par exemple, connue par le brevet français 2454892.

Le chariot de support comprend dans ce cas un plateau horizontal qui, en position de travail, se trouve sous la bande thermoplastique et peut exécuter des mouvements de va-et-vient perpendiculairement au plan vertical déterminé par les axes verticaux des chambres de formage d'une rangée transversale desdites chambres, pour introduire dans chacune des chambres de préenroulement une extrémité d'une banderole qui ensuite sera, par succion d'air, retenue contre la tige de l'organe conformateur et introduite entièrement dans ladite chambre par une rotation de ladite tige.

Pour faciliter l'accès à l'unité d'introduction et découpe transversale des banderoles, le chariot de support peut être extrait de sa position de travail en direction de la bobine de bande-mère installée à poste fixe, en roulant sur des rails surélevés horizontaux dont le niveau correspond à celui de la position des chambres de préenroulement et qui s'étendent dans des directions parallèles au plan vertical transversal comprenant les axes des chambres d'une rangée de chambres de préenroulement ou de formage. En raison de la largeur du plateau horizontal du chariot de support et de l'existence de ces rails suspendus, l'accès aux paires de rouleaux d'introduction et aux couteaux de découpe transversale reste toujours problématique et la difficulté de l'accès aux chambres de formage du bloc de moulage et aux chambres de préenroulement du bloc de support reste inchangée.

Par ailleurs, l'installation connue ne permet pas de vérifier en dehors de la position de service, et à un endroit facilement accessible, le fonctionnement de l'ensemble des éléments contribuant au découpage longitudinal et transversal d'une banderole et à l'introduction de celle-ci dans une chambre de formage du bloc de moulage.

Selon un autre mode de réalisation connu par le brevet français 2425926, on évite le mouvement de va-et-vient du plateau du chariot de support, que ledit plateau exécute dans deux directions opposées perpendiculaires au plan vertical comprenant les axes des chambres de formage, à chaque opération d'introduction d'une banderole dans la chambre de préenroulement, en prévoyant les couteaux de découpe transversale sur une barre mobile parallèlement à la rangée des chambres de préenroulement et les fentes d'introduction sur cette barre mobile qui, en plus, est solidaire du bloc de moulage. Cependant, dans ce cas, il faut retirer de la fente l'extrémité libre de la bande individuelle de laquelle on découpe transversalement les banderoles, afin de ne pas l'abîmer d'une façon quelconque pendant la descente du bloc de moulage dans la position de démoulage. En effet, toute détérioration de l'extrémité de la bande individuelle rend difficile la réintroduction de celle-ci dans la fente d'accès. Il s'ensuit que ce mécanisme connu ne permet pas d'atteindre des cadences de travail élevées.

La présente invention a pour objet de supprimer ces inconvénients et de proposer une installation de thermoformage dans laquelle les différents éléments assurant la découpe transversale des banderoles, leur préformage et l'introduction de celles-ci dans les chambres de formage ne sont non seulement aisément accessibles mais peuvent aussi être mis en état de fonctionnement en dehors de leur position normale de travail dans l'installation de thermoformage.

Ce but est atteint conformément à l'invention du fait que

— le bloc de moulage repose sur le plateau de presse par l'intermédiaire du bloc de support de l'unité de préenroulement et de transfert des banderoles et est fixé de façon normalement inamovible sur l'extrémité supérieure dudit bloc de support ;

— le chariot mobile de l'unité d'introduction et de découpe transversale des banderoles comprend deux chariots partiels disposés l'un derrière l'autre dans le sens d'une rangée de chambres de préenroulement et dont le premier chariot partiel repose, en position de service, entièrement sur au moins une glissière horizontale inférieure du bloc de support et est fixé sur ce dernier de façon amovible, présente une paroi verticale qui est munie des fentes d'accès dans les chambres de préenroulement et délimite une partie latérale de celles-ci et comporte, en amont de chaque fente, l'une des paires de rouleaux d'introduction et, en aval de ladite fente, un couteau de découpe transversale qui coopère avec une arête de ladite fente, faisant fonction de contre-lame, et un moyen de commande des couteaux de découpe transversale, et dont le second chariot partiel, d'une part, est guidé sur des rails prévus sur le sol sur lequel repose l'installation de thermoformage et s'étendant parallèlement à la glissière de guidage du premier chariot partiel, et, d'autre part, comporte le moyen de commande en rotation dont la sortie est reliée par l'intermédiaire d'une liaison à cardan et arbres télescopiques à l'entrée du mécanisme de transmission prévus sur le premier chariot partiel et coopérant avec lesdites paires de rouleaux d'introduction,

— le bloc de support est monté de façon amovible sur le plateau de presse et est susceptible de se déplacer sur ledit plateau de presse dans un sens horizontal parallèle aux sens de déplacement des deux chariots partiels, et repose sur des guides horizontaux du plateau de presse parallèles à la ou aux glissière(s) horizontale(s) pour le premier chariot partiel et, en position de service, est solidaire dudit plateau de presse,

— le second chariot partiel comprend du côté de l'installation de thermoformage une butée de support et de verrouillage susceptible d'être attelée à l'une des extrémités latérales du premier chariot partiel,

— le second chariot partiel est muni d'un moteur d'entraînement assurant son déplacement par rapport au bâti de l'installation de thermoformage, et

— le bloc de support est muni de moyens de commande pour les mouvements de montée et baisse de l'organe conformateur, dont une partie est prévue en dessous dudit bloc et logée dans un évidement transversal du plateau de presse.

Grâce à cette conception, le premier chariot partiel possède une largeur très faible et lorsqu'il est sorti de sa position de service, est très aisément accessible puisque le deuxième chariot partiel se trouve toujours écarté de sa face frontale et, en position écartée dite de vérification, supporte seulement l'une de ses extrémités dont l'autre extrémité repose alors sur le bloc de support de l'unité de préenroulement et de transfert des banderoles.

Cette nouvelle conception permet également de sortir l'ensemble du premier chariot partiel et du bloc de support avec le bloc de moulage hors de leur position de service en faisant supporter l'une des extrémités du premier chariot partiel normalement fixé sur le bloc de support par la butée de support et de verrouillage du second chariot partiel, et l'autre extrémité par le plateau de presse.

C'est dans cette position latérale dite de vérification, que l'on peut vérifier le fonctionnement de tous les éléments nécessaires à la découpe transversale des banderoles, à l'introduction desdites banderoles dans les chambres de préformage et au transfert de ces banderoles dans les chambres des formages du bloc de moulage.

Finalement, lorsque le premier chariot partiel est détaché du bloc de support de l'unité de préenroulement et de transfert des banderoles, on peut sortir ce premier chariot partiel d'un côté de l'installation, et ledit bloc de support et le bloc de moulage de l'autre côté de ladite installation de thermoformage.

Des modes particuliers de réalisation de l'invention sont décrits dans les revendications dépendantes. Un mode de réalisation de l'invention est décrit en référence aux dessins annexés sur lesquels :

— la figure 1 est une vue schématique en plan sur le bloc de moulage et le plateau de presse dans le poste de thermoformage ;

— la figure 2 est une vue transversale en élévation montrant le premier chariot partiel et le second chariot partiel à côté du plateau de presse du poste de thermoformage ;

— la figure 3 est une vue en élévation montrant l'extrémité arrière du second chariot partiel ;

— la figure 4 est une vue en élévation d'une coupe verticale à travers l'ensemble plateau de presse, bloc de support, bloc de moulage et premier chariot partiel, suivant la ligne brisée IV-IV de la figure 6 ;

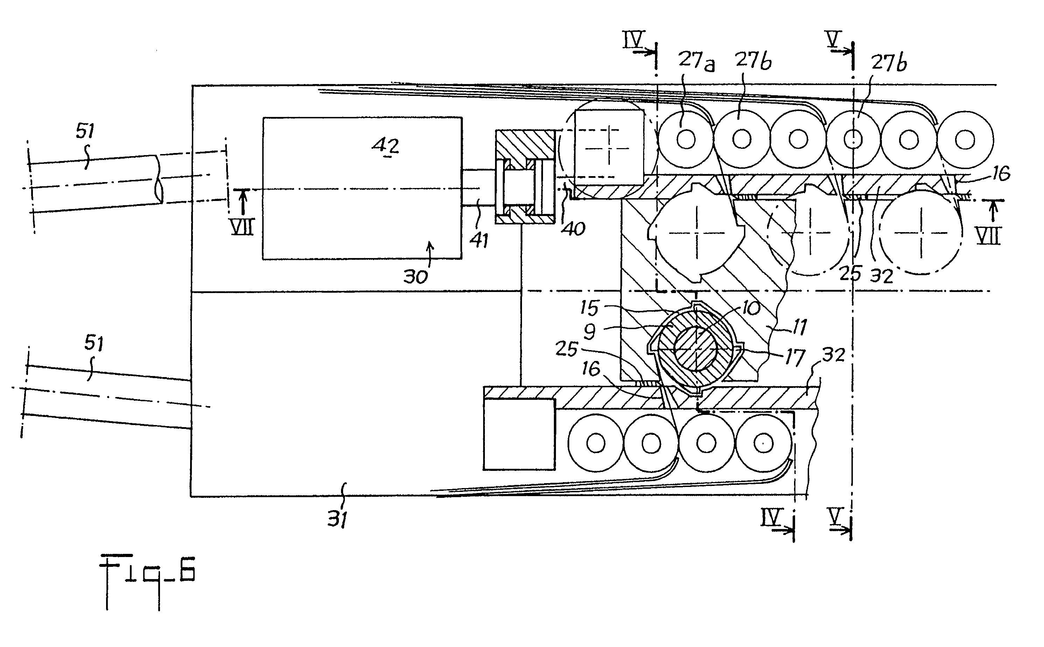

— la figure 5 est une vue en élévation d'une coupe verticale passant à travers l'axe d'un rouleau d'introduction suivant la ligne V-V de la figure 6 ;

— la figure 6 est une vue schématique en plan d'une coupe horizontale passant à travers le premier chariot partiel et le bloc de support, suivant la ligne VI-VI de la figure 4 ;

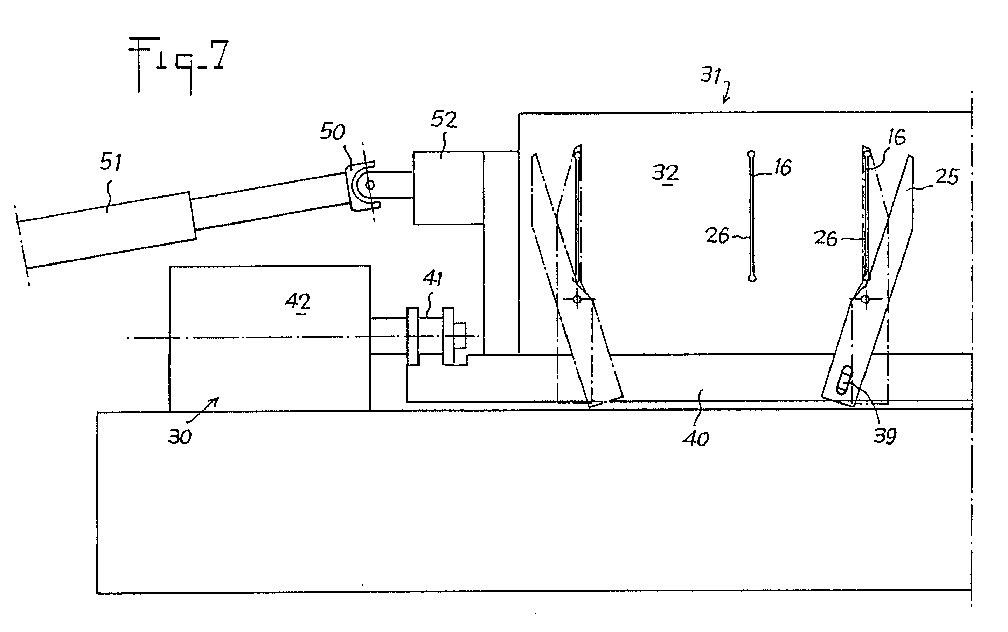

— la figure 7 est une vue en élévation partiellement en coupe d'une partie du premier chariot partiel, suivant la ligne VII-VII de la figure 6 ;

— la figure 8 est une vue en élévation partiellement en coupe du plateau de presse, et des moyens de commande des organes conformateurs suivant la ligne VIII-VIII de la figure 4 ;

— la figure 9 est une vue schématique en perspective montrant les éléments essentiels pour la découpe des bandes individuelles et de l'introduction de ces bandes sous forme de banderoles dans les chambres de préenroulement ;

— la figure 10 est une vue schématique en élévation montrant la partie arrière du second chariot partiel sur lequel sont prévus deux chariots de support pour des bobines de bande-mère et une unité de découpe longitudinale de la bande-mère en bandes individuelles et le système de guidage de ces bandes ;

— la figure 11 est une vue schématique en perspective montrant la partie aval du système de guidage des bandes individuelles avant leur pincement dans les paires de rouleaux d'introduction ;

— la figure 12 est une vue schématique d'une coupe à travers l'unité de découpe longitudinale suivant la ligne XII-XII de la figure 13 ; et

— la figure 13 est une vue en plan de l'unité de découpe longitudinale de la bande-mère.

L'installation de thermoformage des récipients à partir d'une bande thermoplastique et comportant successivement un poste de préchauffage de la bande thermoplastique, un poste de thermoformage de récipients, un poste de remplissage des récipients avec un produit, un poste de scellement des récipients et un poste de découpage des récipients remplis et scellés, sont d'une conception largement connue dans l'état de la technique (voir par exemple brevet français 2034915) de sorte qu'il n'est pas nécessaire de les décrire plus en détail.

L'objet de la présente invention concerne plus particulièrement les moyens de thermoformage et la décoration des récipients thermoplastiques à l'aide de banderoles décoratives.

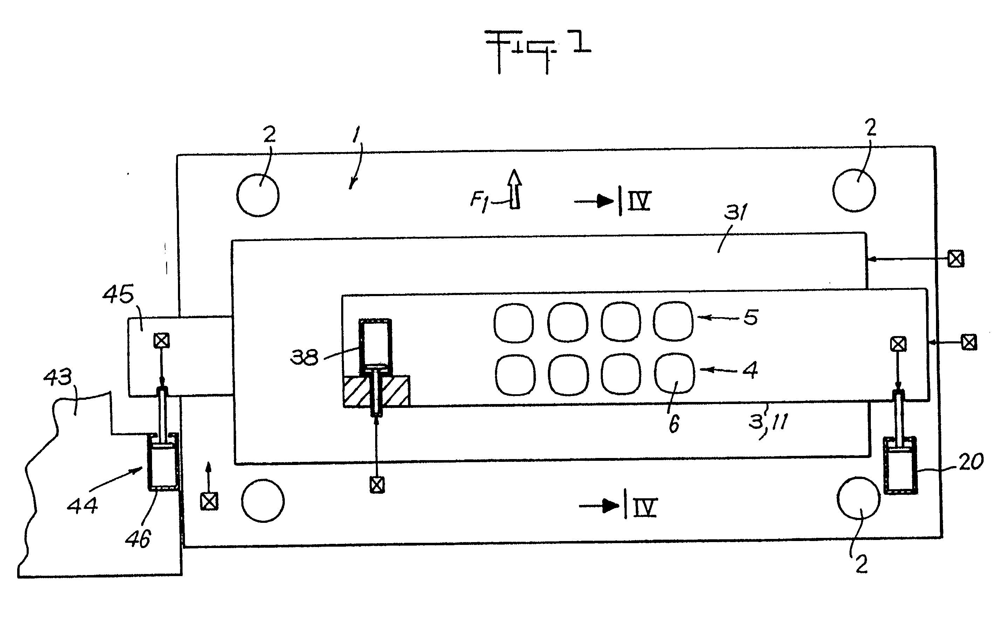

Sur la figure 1, on a représenté schématiquement un plateau de presse 1 prévu dans le poste de thermoformage en dessous du trajet (flèche F1) de la bande thermoplastique non représentée, ce plateau de presse étant animé séquentiellement de mouvements de montée dans une position haute dite de thermoformage et de baisse dans une position basse dite de démoulage en étant guidé verticalement par quatre colonne 2.

Sur ce plateau de presse 1, est disposé un bloc de moulage 3 qui de préférence comprend deux rangées 4, 5 de chambres de formage 6, rangées s'étendant transversalement par rapport à l'extension longitudinale de l'installation de thermoformage, c'est-à-dire perpendiculairement à la direction F1 de déplacement pas à pas de la bande thermoplastique.

Chaque chambre de formage 6 du bloc de moulage comporte une paroi verticale, une ouverture supérieure et une ouverture inférieure, cette dernière étant susceptible d'être fermée par la tête 7 d'un organe conformateur 8 qui en dessous de cette tête 7 présente une tige tubulaire 9 guidée sur une tige verticale pleine 10 dont l'extrémité supérieure est au niveau de l'ouverture inférieure ou fond de la chambre de formage 6 et dont l'extrémité inférieure est solidaire d'un bloc de support 11 de l'unité de préenroulement 12 des banderoles 13.

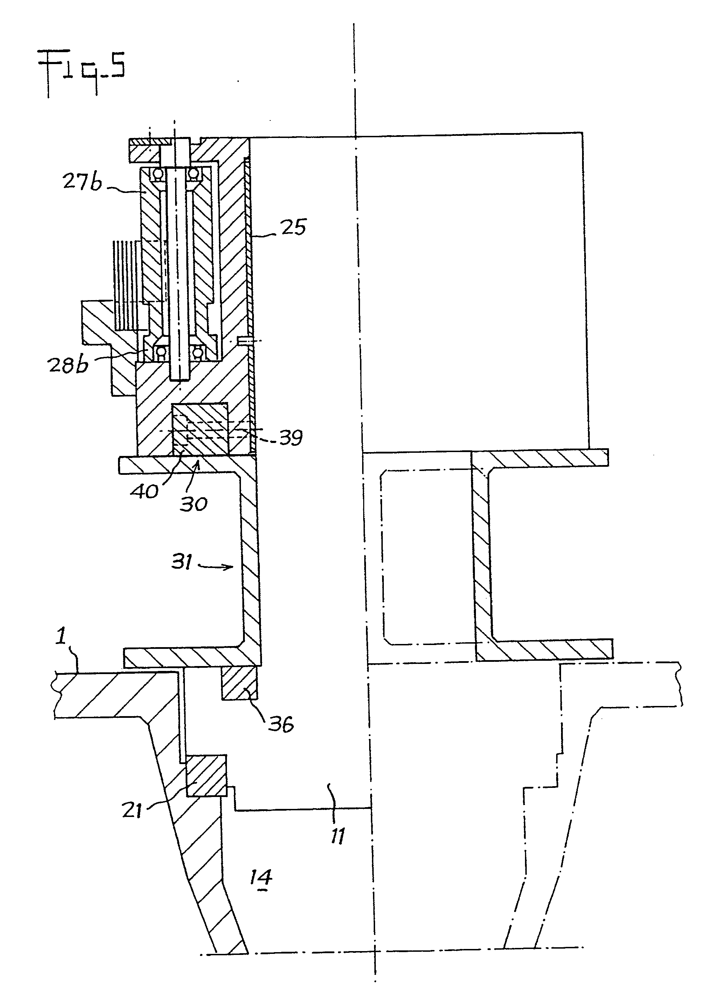

Comme on peut le voir sur la figure 4 notamment, le bloc de moulage 3 repose sur l'extrémité supérieure du bloc de support 11 et y est fixé de façon normalement inamovible tandis que le bloc de support 11 à son extrémité inférieure, est monté de façon amovible sur le plateau de presse 1 qui présente à cet endroit un évidement transversal 14 ouvert vers le haut et aux extrémités latérales.

Le bloc de support 11 de l'unité de préenroulement et de transfert 12 des banderoles 13 comprend en dessous du bloc de moulage 3 autant de chambres de préenroulement 15 que le bloc de moulage 3 possède de chambres de formage 6. Chacune des chambres de préenroulement 15 est alignée coaxialement avec l'une des chambres de formage 6 de sorte que la paroi verticale de chaque chambre de préenroulement 15 délimite un pourtour homothétique à celui de la chambre de formage 6, mais légèrement inférieur au pourtour de celle-ci, de façon à constituer par son bord supérieur, un épaulement annulaire de retenue qui délimite en même temps l'ouverture de fond de la chambre de formage 6 et qui empêche la banderole 13 de revenir vers la chambre de préenroulement 15.

La tige tubulaire 9 de l'organe conformateur 8 comporte dans sa partie médiane qui, lorsque sa tête 7 obture le fond d'une chambre de formage 6, se trouve à l'extrémité inférieure de la chambre de préenroulement 15 et en dessous de la fente verticale d'accès 16 dans cette chambre 15, plusieurs taquets entraîneurs 17 dépassant radialement de ladite tige tubulaire 9 et destinés à faire office d'organe de transfert et à pousser la banderole 13 se trouvant dans la chambre de préenroulement 15 dans la chambre de formage 6.

Les mouvements de montée et de baisse des taquets entraîneurs 17 sont commandés à l'aide d'une traverse 18 dont les extrémités sont déplacées verticalement à l'aide de moyens de commande 19 dont une partie est prévue en dessous du bloc de support 11 et logée dans l'évidement transversal 14 du plateau de presse 1.

Comme précédemment mentionné, le bloc de support 11 est monté de façon amovible sur le plateau de presse 1 et peut être fixé sur ce dernier au moyen d'un vérin de verrouillage 20 dont le cylindre est solidaire du plateau 1 et dont la tige s'engage dans une échancrure du bloc de support. Ce bloc de support 11 peut se déplacer horizontalement et parallèlement au plan vertical comprenant les axes d'une rangée de chambres de formage 4 ou 5 en s'appuyant sur des guides horizontaux 21, 22 du plateau de presse 1.

Le dispositif de découpe, de préformage et de transfert des banderoles 13 comprend aussi une unité d'introduction et de découpe transversale 23 des banderoles 13 à partir de bandes individuelles 24. Cette unité d'introduction 23 présente une pluralité de couteaux de découpe transversale 25 susceptible de coopérer avec une contre-lame 26 pour découper transversalement l'extrémité arrière d'une banderole 13 introduite dans la chambre de préenroulement correspondante 15 à travers une fente verticale d'accès 16 ; une pluralité de paires de rouleaux d'introduction 27a, 27b d'axes parallèles aux fentes verticales d'accès ou d'introduction 16 et disposées en amont juste devant une fente correspondante 16 et susceptibles d'entraîner chacune séquentiellement une bande individuelle 24 pincée entre ses deux rouleaux 27a, 27b, d'un pas égal à la longueur d'une banderole 13 ; des roues dentées 28a, 28b solidaires chacune d'un des rouleaux d'introduction 27a, 27b et engrenant l'une avec l'autre et avec une roue dentée de la paire voisine de rouleaux 27a, 27b ; des moyens de commande 29, 30 pour entraîner séquentiellement les couteaux 25 et les roues dentées 28a, 28b ; et un premier chariot de support partiel 31 qui comprend les fentes d'accès 16, les paires de rouleaux 27a, 27b, les roues dentées 28a, 28b et une partie des moyens de commande 29, 30.

Ce premier chariot de support partiel 31 comprend une paroi verticale de support 32 disposée contre le bloc de support 11 de façon à constituer par une de ses faces verticales, une partie de la paroi verticale des chambres de préenroulement 15. Comme dans l'exemple représenté, le bloc de support 11 comporte deux rangées parallèles de chambres de préenroulement 15, la paroi verticale de support 32 du premier chariot partiel 31 présente en section horizontale transversale la forme d'un U qui, par ses ailes, coiffe les faces verticales transversales du bloc de support 11 entre la face supérieure du plateau de presse 1 et l'extrémité supérieure dudit bloc de support 11. Pour des raisons technologiques, la paroi verticale 32 est constituée par le fond d'un profilé en U 33 dont les ailes latérales 34 s'étendent horizontalement en s'éloignant du bloc de support 11. Ce profilé en U 33 repose d'ailleurs par son aile inférieure sur l'aile supérieure d'un autre profilé en U 35 qui fait également partie du premier chariot partiel 31 qui par son aile inférieure, en position de service, repose entièrement sur des glissières horizontales inférieures 36, 37 de la partie inférieure du bloc de support 11. Ce premier chariot partiel 31 peut être rendu solidaire du bloc de support au moyen d'un vérin de verrouillage 38 dont le cylindre est par exemple fixé sur le bloc de support 11 et dont la tige s'engage dans une échancrure du premier chariot partiel 31. Les glissières horizontales 36, 37 sont également parallèles au plan vertical comprenant les axes des chambres de formage 6 et de préenroulement 15.

Comme on peut le voir sur la figure 4, les paires de rouleaux verticaux 27a, 27b sont supportées par l'aile supérieure horizontale 34 du profilé en U 33 et se situent au même niveau que les chambres de préenroulement 15 et les couteaux 25 situés de l'autre côté de la paroi verticale de support 32 et actionnés à l'aide d'un téton 39 et d'une tringle 40 commandée par la tige 41 d'un vérin 42 monté sur le premier chariot partiel 31.

Un second chariot de support partiel 43 est disposé latéralement par rapport au bloc de moulage 3 et à la direction d'avancement F1 de la bande thermoplastique et en alignement avec le premier chariot partiel 31. Ainsi les deux chariots partiels 31 et 43 sont disposés l'un derrière l'autre dans le sens d'une rangée de chambres de formage 4 ou 5. Le second chariot partiel 43 comprend du côté de l'installation de thermoformage, c'est-à-dire en face du plateau de presse 1 et du premier chariot partiel 31, une butée de support et de verrouillage 44 susceptible d'être attelée sur l'extrémité latérale correspondante 45 du premier chariot partiel 31. Cette butée 44 comprend un vérin de verrouillage 46 dont le cylindre est par exemple fixé sur le second chariot partiel 43 et dont la tige s'engage dans une échancrure de l'extrémité latérale 45 du premier chariot partiel 31.

Le second chariot de support partiel 43 est guidé sur des rails horizontaux 47 prévus sur le sol 48 sur lequel repose l'installation de thermoformage et s'étendant parallèlement aux glissières de guidage 36, 37 du premier chariot partiel 31 et au plan vertical comprenant les axes verticaux des chambres de formage 6 d'une même rangée de chambres 4 ou 5. Sur ce second chariot partiel 43 est prévu un moteur ou autre moyen de commande en rotation 49 dont la sortie est reliée par l'intermédiaire d'une liaison à cardan 50 et arbres télescopiques 51 à l'entrée du mécanisme de transmission 52 prévu sur le premier chariot partiel 31 et coopérant par l'intermédiaire des roues dentées 28a, 28b avec les paires de rouleaux d'introduction 27a, 27b.

Le second chariot partiel 43 comprend en outre un moteur d'entraînement 53 qui assure son déplacement par rapport à l'installation de thermoformage. La sortie de ce moteur 53 attaque par l'intermédiaire d'une vis 54 une roue de commande 55 libre en rotation mais solidaire en translation du second chariot partiel 43. Cette roue à vis 55 coopère avec une tige filetée horizontale 56 dont une extrémité est fixée sur un flasque latéral 57 du bâti de l'installation de thermoformage et qui s'étend parallèlement aux rails 47 du second chariot partiel 43.

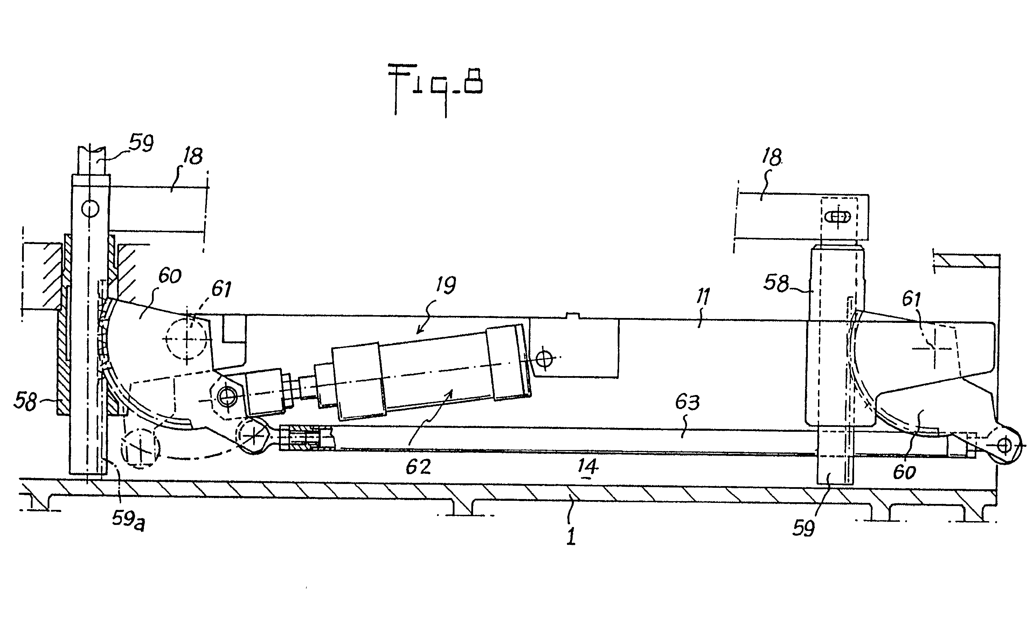

Comme on peut le voir notamment sur la figure 8, le bloc de support 11 comporte sur sa partie inférieure pénétrant dans l'évidement transversal 14 du plateau de presse 1 les moyens de commande 19 pour la traverse 18 assurant la montée et la baisse de l'organe conformateur 8 par rapport au bloc de moulage 3. Ces moyens de commande 19 comprennent par rangée d'organes conformateurs 8, deux tubes de guidage verticaux 58 solidaires des extrémités latérales inférieures du bloc de support 11, deux tiges verticales 59 coulissant chacune dans l'un des tubes de guidage 58, raccordées à leur extrémité supérieure à la traverse horizontale de commande 18 et présentant, à leur partie inférieure, une crémaillère 59a qui coopère avec un secteur denté 60 articulé, d'une part, sur un axe 61 solidaire du bloc de support 11 et, d'autre part, sur la tige d'un vérin 62 dont le cylindre est également articulé sur ledit bloc 11. Une tringle de liaison 63 relie les deux secteurs dentés 60 pour éviter l'emploi d'un deuxième vérin de commande.

Le second chariot partiel 43 est avantageusement conçu de façon à pouvoir recevoir plusieurs bobines de bande-mère 64 (quatre dans l'exemple représenté) montées chacune sur un chariot de transport 65 à roues libres et susceptibles de rouler et s'orienter sur le plancher 66 du second chariot partiel 43 en étant guidé par un guidage 67 s'étendant parallèlement à la direction de déplacement F1 de la bande thermoplastique et perpendiculairement au sens de déplacement des chariots partiels 31 et 43. La bobine de bande-mère 64 est disposée sur le second chariot partiel 43 de telle sorte que son axe soit parallèle aux rails de guidage 47 dudit second chariot 43 et que les axes des bobines 64 soient alignés par paire de bobines 64.

Le second chariot partiel 43 comporte avantageusement, au-dessus de l'emplacement des bobines de bande-mère 64 un châssis 68 supportant l'unité de découpe 69 d'au moins une bande-mère 70 et de préférence de deux bande-mère 70, 71 en bandes individuelles 24 ainsi que le rouleau de guidage à position réglable 72 pour chacune des bandes individuelles 24 et les rouleaux 73 ou barrettes de renvoi 74, 75 pour ces dernières.

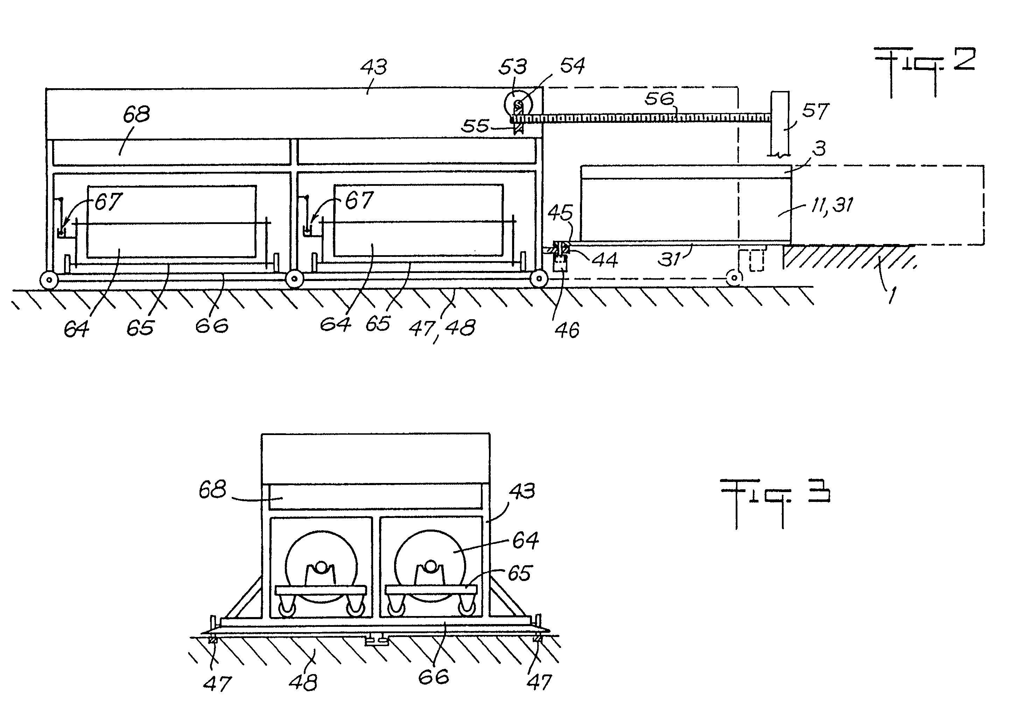

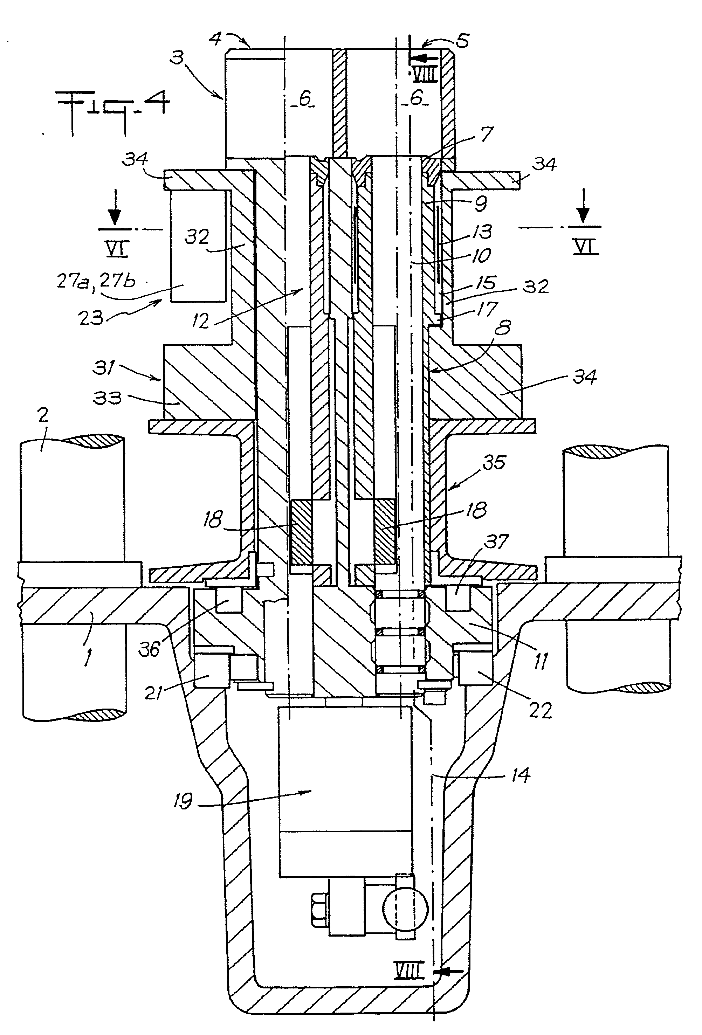

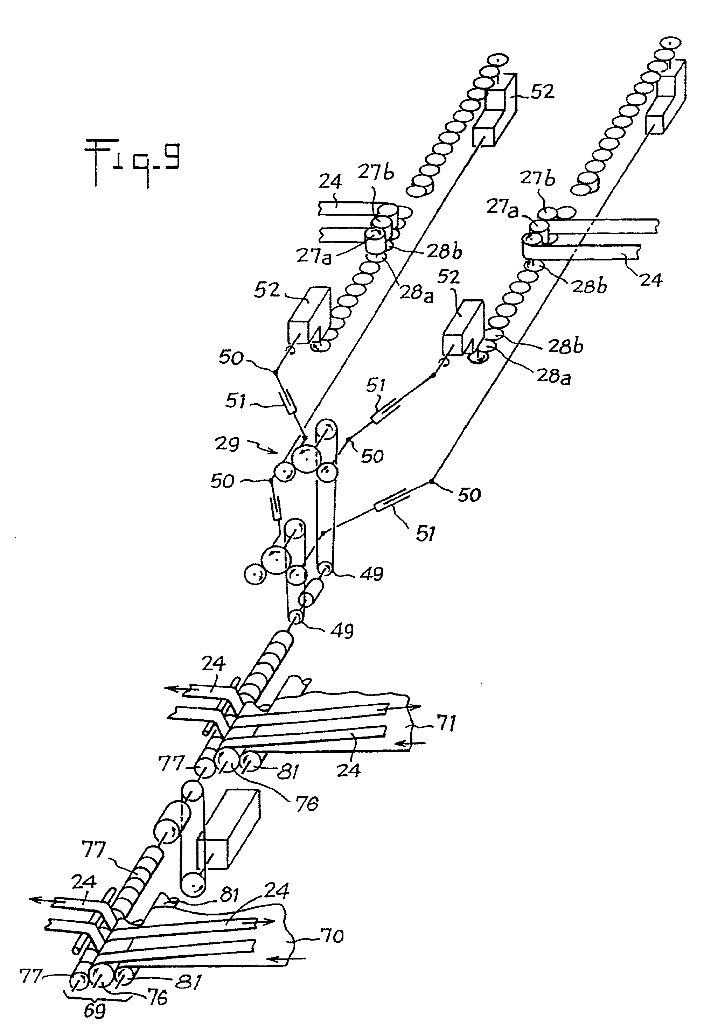

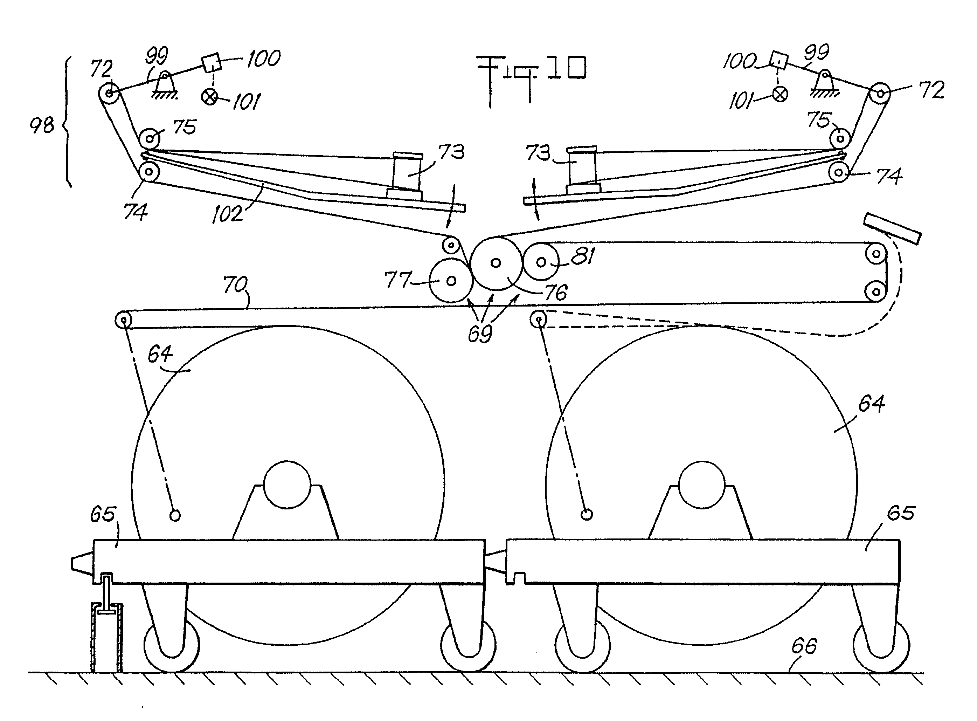

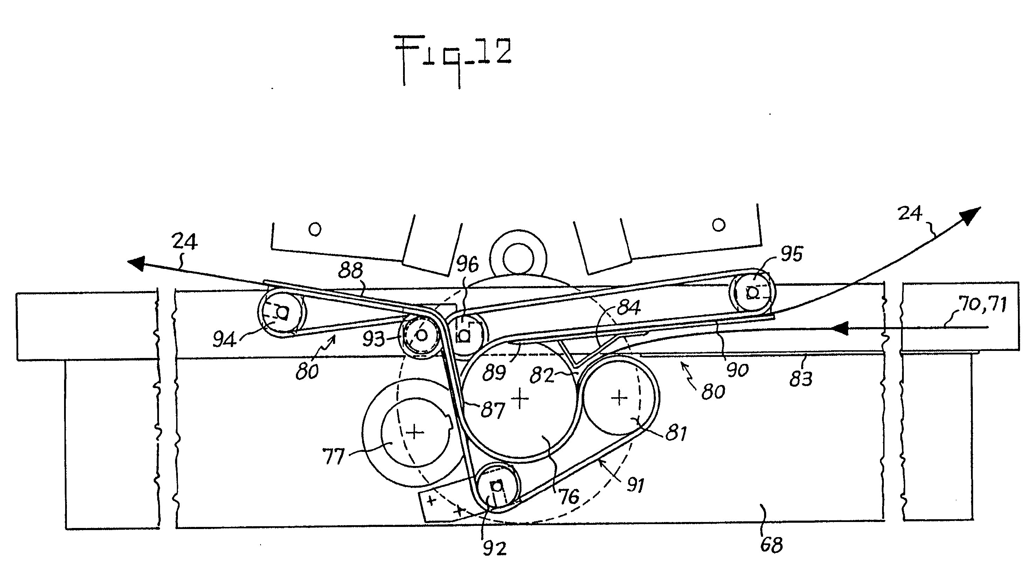

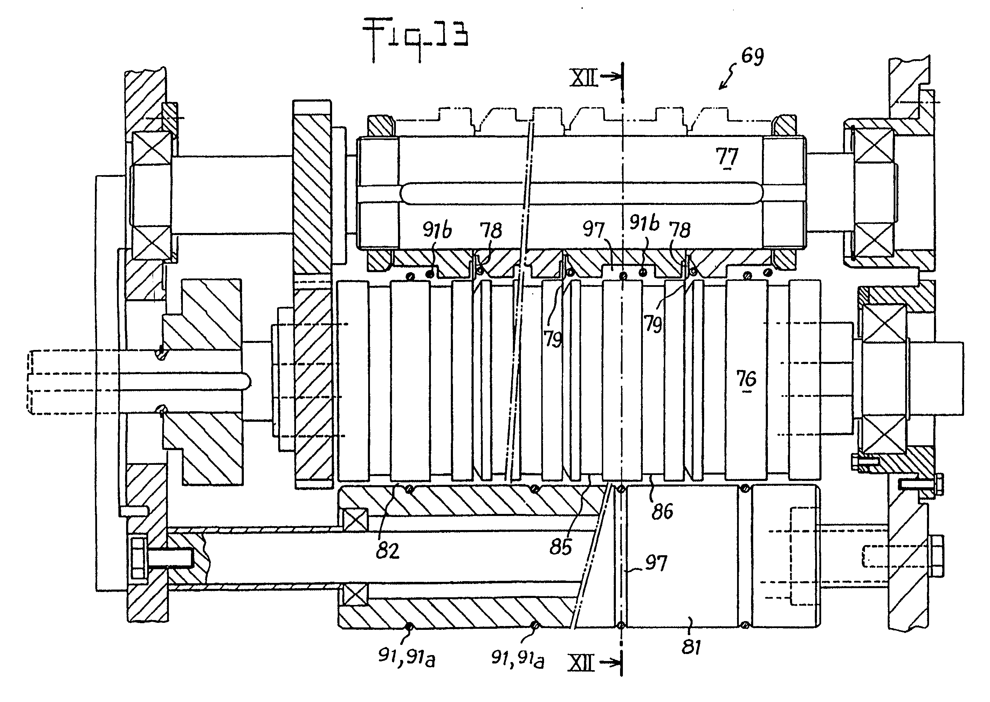

Comme on peut le voir, notamment sur les figures 2, 3 et 9 à 13, le second chariot partiel 43 comporte donc en tant qu'unité de découpe longitudinale 69 un cylindre à contre-lames 76 et un cylindre à lames annulaires 77 dont les lames 78 coopèrent avec les contre-lames 79 du cylindre 76. Afin d'éviter toute introduction manuelle d'une extrémité de la bande-mère 70, 71 entre les lames 78 et contre-lames 79, il est prévu un dispositif de guidage 80 pour la bande-mère 70, 71 et pour les bandes individuelles 24 sortant de l'unité de découpe longitudinale 69, ce dispositif de guidage 80 devant renvoyer les bandes individuelles 24 alternativement vers un côté et vers l'autre (vers la gauche et vers la droite sur les figures 9 et 10).

Il convient aussi de préciser que les cylindres à contre-lames 76 et à lames 77 sont disposés sur le second chariot partiel 43 de telle sorte que leurs axes soient parallèles aux rails de guidage 47 dudit second chariot 43.

En amont du cylindre à contre-lames 76 est prévu un cylindre de guidage 81 qui fait partie du dispositif 80 et délimite avec le pourtour du cylindre à contre-lames 76 une fente de passage 82. Une tôle de guidage horizontale 83 est disposée en amont du cylindre de guidage 81 et s'approche tangentiellement de la génératrice supérieure de celle-ci. Une autre tôle de guidage 84 est disposée de façon inclinée au-dessus du cylindre de guidage et s'approche par son extrémité inférieure de la fente de passage 82.

Entre deux échancrures annulaires faisant office de contre-lames 79, le cylindre 76 comprend une paire de gorges annulaires 85, 86 dans lesquelles s'engagent, d'une part, en face et en aval de la zone de contact des lames 78 et contre-lames 79 et dans chaque paire de gorges impaire des griffes de décollement 87 prolongées vers l'extérieur (gauche) par une tôle de guidage 88 et d'autre part, à la partie supérieure du cylindre à contre-lames 76, dans chaque paire de gorges paire, des griffes de décollement 89 prolongées vers l'extérieur (droit) par une tôle de guidage 90. La bande-mère 70, 71 et les bandes individuelles sont guidées vers les cylindres 76, 77 de l'unité de découpe longitudinale 69 et ensuite vers l'un ou l'autre côté de cette unité 69 à l'aide de plusieurs courroies sans fin 91 (à section transversale circulaire) qui passent autour du cylindre de guidage 81 et plusieurs rouleaux de renvoi 92, 93, 94, 95, 96 et entre les cylindres à contre-lames 76 et à lames 77 ainsi qu'entre le cylindre à contre-lames 76 et le cylindre de guidage 81. Il est à noter que les brins aller 91a et retour 91b de chaque courroie sans fin 91 sont décalés latéralement lors de leur passage entre les cylindres à contre-lames 76 et à lames 77 et que ces courroies 91 sont guidées au moins partiellement dans des rainures annulaires 97 prévues soit sur le cylindre de guidage 81, soit sur les cylindres 76 et 77.

Il est également avantageux de prévoir sur le second chariot partiel 43 un dispositif suiveur 98 qui permet de maintenir constante la longueur du trajet de chacune des bandes individuelles 24 entre le dispositif de découpe longitudinale 69 et la paire de rouleaux d'introduction correspondante 27a, 27b prévue sur le premier chariot de support partiel 31.

Ce dispositif suiveur 98 comprend le rouleau de guidage à position réglable 72 qui joue en même temps le rôle d'un rouleau tendeur fixé sur l'extrémité d'un double levier 99 dont l'autre extrémité porte un contre-poids 100 et, dans sa chute, passe devant une cellule photoélectrique ou autre élément de détection 101 permettant de constater un défaut d'avancement de la bande individuelle 24 ou la casse de celle-ci.

Le dispositif suiveur 98 comprend en outre une plateforme oscillante 102 qui est articulée à son bord extérieur sur un axe horizontal 103 porté par le second chariot partiel 43 et parallèle aux rails de guidage 47 de celui-ci et aux glissières 21, 22 et 36, 37. Cet axe de pivotement 103 coïncide d'ailleurs avec l'axe horizontal de la barrette de renvoi 75 qui, sur la figure 10, a été représenté légèrement au-dessus de l'axe de pivotement horizontal 103. Près de son bord intérieur (par rapport au plan vertical passant par les axes des chambres de formage d'une rangée de chambres 4 ou 5), la plateforme oscillante 102 présente autant de rouleaux de renvoi 73 qu'il y a de bandes individuelles 24 par rangée de chambres 4 ou 5, mais pour la clarté du dessin, un seul rouleau de renvoi 73 a été représenté, l'axe de ce rouleau 73 étant perpendiculaire à la plateforme oscillante 102 dont le bord intérieur 102a se situe dans le prolongement d'une rangée de chambres de formage 4 ou 5 et en position horizontale de la plateforme 102 à peu près à mi-hauteur entre la position haute et la position basse des paires de rouleaux d'introduction 27a, 27b, correspondant respectivement à la position haute de thermoformage et à la position basse de démoulage du bloc de moulage 3.

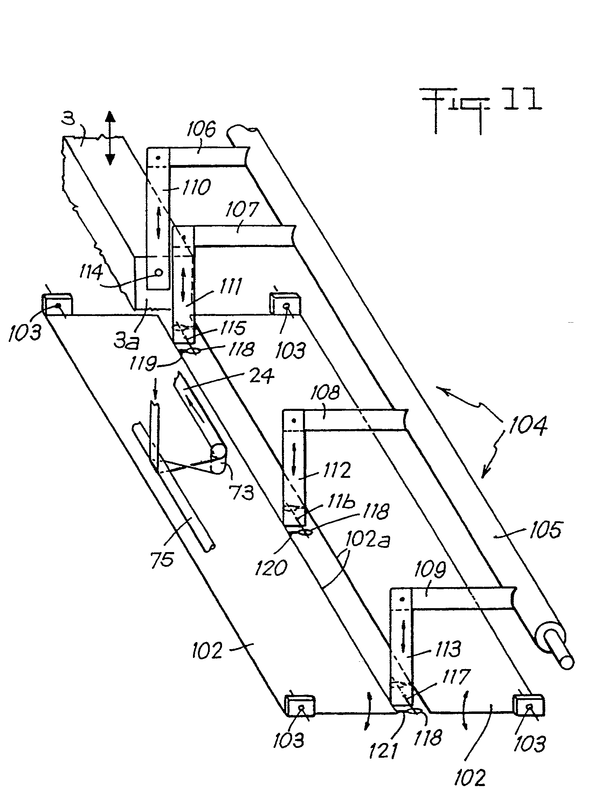

Afin de suivre les mouvements de montée et de baisse du bloc de moulage 3, mouvements indiqués par la double flèche verticale F2 (figure 11) le bord intérieur 102 de la plateforme oscillante 102 est relié par une tringlerie de liaison 104 à une face latérale verticale 3a du bloc de moulage 3 ou à un autre élément suivant les mouvements de montée et de baisse de ce dernier.

Cette tringlerie de liaison 104 comprend un arbre d'oscillation 105 parallèle à l'axe de pivotement 103 de la plateforme 102 et porté dans des paliers non représentés du second chariot partiel 43. Sur cet arbre d'oscillation 105 sont fixés ridigement plusieurs bras 106, 107, 108, 109 qui sont de même longueur et parallèles entre eux et, à leur extrémité libre, sont articulés chacun à l'extrémité supérieure d'une bielle 110, 111, 112, 113 dont l'extrémité inférieure porte un axe d'articulation 114, 115, 116, 117, parallèles à l'axe de pivotement 103 et à l'arbre d'oscillation 105 et alignés entre eux.

La bielle 110 coopérant avec le premier bras 106 situé près de la face latérale verticale 3a du bloc de moulage 3 est reliée par son axe d'articulation inférieure 114 à ladite face latérale 3a de sorte que lors des mouvements de montée et de baisse du bloc de moulage 3, l'arbre d'oscillation 105 va exécuter un mouvement d'oscillation et transmettre ce mouvement aux trois autres bras 107, 108, 109 qui lui sont rigidement solidaires.

Les autres axes d'articulation 115, 116, 117 portés chacun par l'extrémité inférieure d'une bielle 111, 112, 113 s'engagent respectivement dans le trou oblong 118 de l'un des trois doigts d'accouplement 119, 120, 121 qui sont fixés sur le bord intérieur 102a dans le prolongement de la plateforme oscillante 102 et respectivement sur les extrémités et la partie médiane de ladite plateforme 102. Ainsi les mouvements de montée et de baisse du bloc de moulage 3 sont transformés en des mouvements analogues de montée et de baisse de la partie marginale intérieure de la plateforme 102 qui oscille alors autour de son axe de pivotement 103 tout en permettant au tronçon de bande individuelle 24 situé en aval du dernier rouleau de renvoi 73 de suivre presque exactement les courses ascendantes et descendantes de la paire de rouleaux d'introduction correspondante 27a, 27b.

L'objet de la présente invention n'est pas limitée par le mode de réalisation précédemment décrit, mais couvre au contraire toutes les formes de réalisation comprises dans le champ de protection des revendications annexées.

## Revendications

1. Installation de thermoformage simultané d'au moins une rangée de récipients en matière thermoplastique dont les récipients sont munis chacun d'une banderole décorative (13), installation du type comportant :

— d'une part, un poste de thermoformage à travers lequel passe pas à pas une bande thermoplastique préchauffée à sa température de formage, et qui comprend, en dessous du trajet de ladite bande thermoplastique, un bloc de moulage (3) muni d'une pluralité de chambres cylindriques verticales de formage (6) disposées en au moins une rangée transversale (4, 5) et présentant, à leur extrémité inférieure, une ouverture susceptible d'être fermée par un élément de fond (7) mobile par rapport au bloc de moulage (3) qui repose sur un plateau de presse (1) verticalement mobile entre une position haute dite de thermoformage et une position basse dite de démoulage des récipients, et

— d'autre part, un dispositif de découpe, de préformage et de transfert des banderoles (13) dans les chambres de formage (6) du bloc de moulage (3), ce dispositif comprenant de l'amont vers l'aval dans le sens de déplacement des banderoles (13) :

—— un rouleau de support d'une bobine de bande-mère (64) monté, de part et d'autre de ladite bobine, dans des paliers,

— une unité de découpe longitudinale (69) de la bande-mère (70, 71) en bandes individuelles (24) prévue sur un bâti de support (43) écarté latéralement du bloc de moulage (3),

— une unité de préenroulement (12) des banderoles décoratives (13), unité présentant dans un bloc de support (11) qui est disposé en dessous du bloc de moulage (3) :

a) une pluralité de chambres cylindriques verticales de préenroulement (15) alignées chacune avec l'une des chambres de formage (6),

b) un organe conformateur (8) dont la tige (9) traverse la chambre de préenroulement (15) et forme avec la paroi verticale de celle-ci une chambre annulaire étroite de guidage et de préenroulement et est susceptible de pénétrer par en dessous dans la chambre de formage (6) et appliquer ladite banderole (13) contre la paroi latérale verticale de celle-ci,

c) une pluralité de fentes verticales d'accès (16) dont chacune est ménagée dans une paroi latérale (32) délimitant une partie des chambres de préenroulement (15) et débouche dans une de celles-ci, et

d) un organe de transfert (17) prévu dans la chambre annulaire de préenroulement et de guidage (15), et susceptible de supporter la banderole (13) jusqu'à ce que celle-ci ait été transférée à la chambre de formage (6), et

— une unité d'introduction et de découpe transversale (23) de banderoles (13) présentant :

a) une pluralité de paires de rouleaux d'introduction (27a, 27b) susceptibles d'entraîner la bande individuelle (24) pincée entre ses deux rouleaux (27a, 27b) d'un pas égal à la longueur d'une banderole (13),

b) une pluralité de couteaux (25) susceptibles de coopérer chacun avec une contre-lame (26) pour découper transversalement l'extrémité arrière de la banderole (13) introduite au moins partiellement dans la chambre de préenroulement correspondante (15),

c) des moyens de commande (29, 30) pour faire tourner les rouleaux d'introduction (27a, 27b) et actionner séquentiellement les couteaux de découpe transversale (25), et

d) un chariot de support (31, 43) mobile horizontalement, parallèlement au plan comprenant les axes des chambres (6) d'une rangée de chambres de formage (4, 5) et perpendiculairement à la direction d'avancement (F1) de la bande thermoplastique au droit du poste de formage et portant les couteaux de découpe transversale (25), les paires de rouleaux d'introduction (27a, 27b) et les moyens de commande (29, 30) de ceux-ci, **caractérisée en ce que**

— le bloc de moulage (3) repose sur le plateau de presse (1) par l'intermédiaire du bloc de support

(11) et y est fixé de façon normalement inamovible ;

— le chariot mobile (31, 43) comprend deux chariots partiels (31 et 43) disposés l'un derrière l'autre dans le sens d'une rangée de chambres de préenroulement (15) ;

— le premier chariot partiel (31) repose, en position de service, entièrement sur le bloc de support (11) et est fixé sur ce dernier de façon amovible, présente une paroi verticale de support (32) qui est munie des fentes d'accès (16) dans les chambres de préenroulement (15) et délimite une partie latérale de celles-ci et comporte, en amont de chaque fente (16), l'une des paires de rouleaux d'introduction (27a, 27b) et, en aval de ladite fente (16), un couteau de découpe transversale (25) qui coopère avec une arête (26) de ladite fente (16), et un moyen de commande (30, 40 à 42) des couteaux de découpe transversale (25) ainsi qu'un mécanisme de transmission (52) coopérant avec lesdites paires de rouleaux d'introduction (27a, 27b) ;

— le second chariot partiel (43), d'une part, est guidé sur le sol (48) sur lequel repose l'installation de thermoformage parallèlement au premier chariot partiel (31), et, est susceptible d'être attelée à l'une (45) des extrémités latérales du premier chariot partiel (31), et d'autre part, comporte un moteur d'entraînement (53) assurant son déplacement par rapport au bâti (57) de l'installation de thermoformage, et un moyen de commande en rotation (49) dont la sortie est reliée à l'entrée du mécanisme de transmission (52), et

— le bloc de support (11) est monté de façon amovible sur le plateau de presse (1), est susceptible de se déplacer sur ledit plateau de presse (1) dans un sens horizontal parallèle aux sens de déplacement des deux chariots partiels (31, 43), et est muni de moyens de commande (19) pour les mouvements de montée et baisse de l'organe conformateur (8).

2. Installation de thermoformage selon la revendication 1, caractérisée en ce qu'une partie des moyens de commande (19) pour les mouvements de montée et de baisse de l'organe conformateur (8) est prévue en dessous du bloc de support (11) et logée dans un évidement transversal (14) du plateau de presse (1).

3. Installation de thermoformage selon l'une des revendications 1 et 2, caractérisée en ce que le bloc de support (11) comporte deux rangées parallèles de chambre de préenroulement (15) et la paroi verticale de support (32) du premier chariot partiel (31) présente en section transversale horizontale la forme d'un U et, par ses ailes, coiffe les faces verticales transversales du bloc de support (11) entre la face supérieure de ce dernier et la face supérieure du plateau de presse (1).

4. Installation de thermoformage selon l'une des revendications 1 à 3, caractérisée en ce que la paroi verticale de support (32) du premier chariot partiel (31) est constituée par le fond d'un profilé en U (33) dont les ailes latérales (34) s'étendent horizontalement en s'éloignant du bloc de support (11) et que les paires de rouleaux verticaux (27a, 27b) sont supportées par l'aile supérieure (34) du profilé en U (33) et se situent au même niveau que les chambres de préenroulement (15) et les couteaux (25) disposés de l'autre côté de ladite paroi verticale (32).

5. Installation de thermoformage selon l'une des revendications 1 à 4, caractérisée en ce que les couteaux (25) sont actionnés à l'aide d'un téton (39) et d'une tringle (40) commandée par la tige (41) d'un vérin (42) monté sur le premier chariot partiel (31).

6. Installation de thermoformage selon l'une des revendications 1 à 5, caractérisée en ce que le second chariot partiel (43) comprend, en face du plateau de presse (1) et du premier chariot partiel (31), une butée de support et de verrouillage (44) susceptible d'être attelée sur l'extrémité latérale correspondante (45) du premier chariot partiel (31).

7. Installation de thermoformage selon l'une des revendications 1 à 6, caractérisée en ce que la sortie du moyen de commande en rotation (49) prévu sur le second chariot partiel (43) est reliée à l'entrée du mécanisme de transmission (52) prévu sur le premier chariot partiel (31), par l'intermédiaire d'une liaison à cardan (50) et arbres télescopiques (51).

8. Installation de thermoformage selon l'une des revendications 1 à 7, caractérisée en ce que le moteur d'entraînement (53) du second chariot partiel (43) comporte en tant que sortie une vis (54) agissant sur une roue à vis (55) qui est libre en rotation, mais solidaire en translation dudit second chariot partiel (43) et qui coopère avec une tige filetée (56) qui s'étend parallèlement aux rails de guidage (47) du second chariot partiel (43) et dont une extrémité est fixée sur un flasque latéral (57) du bâti de l'installation de thermoformage.

9. Installation de thermoformage selon l'une des revendications 1 à 8, caractérisée en ce que les moyens de commande (19) pour la montée et la baisse des organes conformateurs (8) agissent sur une traverse de commande (18) et comprennent par rangée d'organes conformateurs (8), deux tubes de guidage verticaux (58) solidaires des extrémités latérales inférieures du bloc de support (11), deux tiges verticales (59) coulissant chacune dans l'un des tubes de guidage (58), raccordées à leur extrémité supérieure à la traverse horizontale de commande (18) et présentant, à leur partie inférieure, une crémaillère (59a) qui coopère avec un secteur denté (60) articulé, d'une part, sur un axe (61) solidaire du bloc de support (11) et, d'autre part, sur la tige d'un vérin (62) dont le cylindre est également articulé sur ledit bloc (11), une tringle de liaison (63) reliant les deux secteurs dentés (60) coopérant chacun avec l'une des deux tiges verticales (59).

10. Installation de thermoformage selon l'une des revendications 1 à 9, caractérisée en ce que le second chariot partiel (43) est conçu pour recevoir plusieurs bobines de bande-mère (64) montées chacune sur un chariot de transport (65) à roues libres, susceptible de rouler et s'orienter sur le plancher (66) du second chariot partiel (43) en étant guidé par un guidage (67) s'étendant perpendiculairement au sens de déplacement des chariots partiels (31 et 43).

11. Installation de thermoformage selon la revendication 10, caractérisée en ce que chaque bobine de bande-mère (64) est disposée sur le second chariot partiel (43) de telle sorte que son axe soit parallèle aux rails de guidage (47) dudit second chariot (43) et que les axes des bobines (64) soient alignés par paire de bobines (64).

12. Installation de thermoformage selon l'une des revendications 1 à 11, caractérisée en ce que le second chariot partiel (43) comporte un châssis (68) supportant l'unité de découpe longitudinale (69) d'au moins une bande-mère (70) en bandes individuelles (24) ainsi qu'un rouleau de guidage à position réglable (72) pour chacune des bandes individuelles (24) et les rouleaux ou barrettes (74, 75) de renvoi pour ces dernières.

13. Installation de thermoformage selon l'une des revendications 1 à 12, caractérisée en ce que l'unité de découpe longitudinale (69) comprend deux cylindres (76, 77) à axes parallèles aux rails de guidage (47) du second chariot partiel (43), l'un des deux cylindres étant un cylindre à contre-lames (76) et l'autre un cylindre à lames anulaires (77) dont les lames (78) coopèrent avec les contre-lames (79) du cylindre (76).

14. Installation de thermoformage selon l'une des revendications 1 à 13, caractérisée en ce que le second chariot partiel (43) comprend un dispositif de guidage (80) associé aux cylindres (76, 77) de l'unité de découpe longitudinale (69), destiné à renvoyer les bandes individuelles découpées (24) alternativement vers un côté et vers l'autre de ladite unité (69) et comprenant un cylindre de guidage (81) qui délimite avec le pourtour du cylindre à contre-lames (76) une fente de passage (82), une tôle de guidage horizontale (83) disposée en amont du cylindre de guidage (81) et s'approchant tangentiellement de la génératrice supérieure de celle-ci, une autre tôle de guidage (84) disposée de façon inclinée au-dessus du cylindre de guidage (81) et s'approchant, par son extrémité inférieure, de la fente de passage (82) ainsi qu'une pluralité de paires de gorges annulaires (85, 86) dont chaque paire est prévue entre deux contre-lames voisines (79) du cylindre à contre-lames (76) et dans lesquelles s'engagent, d'une part, en face et en aval de la zone de contact des lames (78) et contre-lames (79) dans chaque paire de gorges impaire, des griffes de décollement (87) prolongées vers l'extérieur par une tôle de guidage (88) et, d'autre part, à la partie supérieure du cylindre à contre-lames (76), dans chaque paire de gorges impaire, des griffes de décollement (89) prolongées vers l'extérieur par une tôle de guidage (90).

15. Installation de thermoformage selon la revendication 14, caractérisée en ce que le dispositif de guidage (80) comprend, en outre, plusieurs rouleaux de renvoi (92, 93, 94, 95, 96) et plusieurs courroies sans fin (91) qui passent autour de ces derniers et le cylindre à contre-lames (76) et le cylindre à lames (77) ainsi qu'entre le cylindre à contre-lames (76) et le cylindre de guidage (81), que les brins aller (91a) et retour (91b) de chaque courroie (91) sont décalés latéralement lors de leur passage entre les cylindres à contre-lames (76) et à lames (77) et que ces courroies (91) sont guidées au moins partiellement dans des rainures annulaires (97) prévues soit sur le cylindre de guidage (81), soit sur les cylindres (76 et 77).

16. Installation de thermoformage selon l'une des revendications 1 à 15, caractérisée en ce que le second chariot partiel (43) comprend un dispositif suiveur (98) susceptible de maintenir constante la longueur du trajet de chacune des bandes individuelles (24) entre l'unité de découpe longitudinale (69) et la paire de rouleaux d'introduction correspondante (27a, 27b) prévue sur le premier chariot partiel (31).

17. Installation de thermoformage selon la revendication 16, caractérisée en ce que le dispositif suiveur (98) comprend : une plateforme oscillante (102) qui, près de son bord extérieur, est articulé sur un axe horizontal (103) porté par le second chariot partiel (43), axe parallèle aux rails de guidage (47) de ce dernier et coïncidant avec l'axe horizontal de la barrette de renvoi (75), et qui, près de son bord intérieur (102a) se situant dans le prolongement d'une rangée de chambres de formage (4 ou 5) et, en position horizontale de la plateforme (102), à peu près à mi-hauteur entre la position haute et la position basse des paires de rouleaux d'introduction (27a, 27b), présente autant de rouleaux de renvoi (73) qu'il y a de bandes individuelles (24) par rangée de chambres (4 ou 5), l'axe de chacun desdits rouleaux de renvoi (73) étant perpendiculaire à la plateforme oscillante (102), ainsi qu'une tringlerie de liaison (104) qui relie ladite plateforme (102) au bloc de moulage (3) pour imprimer à cette dernière les mouvements de montée et de baisse dudit bloc de moulage (3).

18. Installation de thermoformage selon l'une des revendications 16 et 17, caractérisée en ce que le dispositif suiveur (98) comprend un rouleau de guidage à position réglable (72) monté sur l'extrémité d'un double levier (99) dont l'autre extrémité porte un contrepoids (100) associé à un élément de détection (101) prévu à côté du trajet de chute dudit contrepoids (100).

**Patentansprüche**

1. Anlage zur gleichzeitigen Warmformung von wenigstens einer Reihe von Behältern aus thermoplastischem Material, deren Behälter jeweils mit einer dekorativen Banderole (13) versehen sind, Anlage vom Typ die aufweist :

einerseits eine Warmformungseinrichtung, die Schritt für Schritt ein auf seine Formungstemperatur vorgeheiztes thermoplastisches Band durchquert, und die unterhalb des Weges des thermoplastischen Bandes einen Formblock (3) aufweist, der mit einer Mehrzahl von vertikalen Formungszylindern (6) versehen ist, die auf wenigstens einer Querreihe (4, 5) angeordnet sind und an ihrem unteren Ende eine Öffnung aufweisen, die geeignet ist, durch ein Bodenelement (7) geschlossen zu werden, das bezüglich des Formblocks (3) bewegbar ist, der auf einer Preßplatte (1) ruht, die vertikal zwischen einer oberen Stellung, genannt Warmformung, und einer unteren Stellung, genannt Ausformung der Behälter, bewegbar ist, und

andererseits eine Vorrichtung des Schneidens, des Vorformens und Übertragens von Banderolen (13) in die Formkammern (6) des Formblocks (3), wobei diese Vorrichtung von stromauf bis stromab in Richtung der Bewegung der Banderolen (13) aufweist :

eine Stützrolle einer Spule von Mutterband (64), die beiderseits der Spule in Lagern angebracht ist,

eine Längsschneideeinheit (69) des Mutterbandes (70, 71) in einzelne Bänder (24), die auf dem Rahmens des Trägers (43) seitlich vom Formblock (3) beabstandet werden,

eine Voraufwickeleinheit (12) der dekorativen Banderolen (13), die in einem Stützblock (11), der unterhalb des Formblocks (3) aufweist :

a) eine Mehrzahl von zylindrischen vertikalen Voraufwickelkammer (15), die jeweils einzeln mit einer der Formungskammern (6) ausgerichtet sind,

b) ein Abkühlorgan (8), dessin Stange (9) die Voraufwickelkammer (15) durchquert und mit der vertikalen Seitenwand von dieser eine kreisförmige Kammer zum Führen und Voraufwickeln bildet und geeignet ist, von unten in die Formungskammer (6) einzudringen und die genannte Banderole (13) gegen die vertikale Seitenwand von jener zu drücken,

c) eine Mehrzahl von vertikalen Zugangskerben (16), von denen jede in einer seitlichen Wand (32) ausgbildet ist, die einen Bereich der Voraufwickelkammer (15) begrenzt und in eine von ihnen mündet, und

d) ein Übertragungsorgan (17), das in der ringförmigen Voraufwickel- und Führungskammer (15) vorgesehen ist, und dazu dient, die Banderole (13) zu stützen, bis jene zur Formungskammer (6) übertragen ist, und

eine Einführ- und Querschneideeinheit (23) der Banderolen (13) mit :

a) einer Mehrzahl von Einführrollenpaaren (27a, 27b), die geeignet sind, das einzelne Band (24) eingezwickt zwischen ihren beiden Rollen (27a, 27b) mit einem Schritt anzutreiben, der gleich der Länge einer Banderole (13) ist,

b) einer Mehrzahl von Messern (25), die geeignet sind, jeweils mit einer Gegenschneide (26) zusammenzuwirken, um quer das hintere Ende der Banderole (13) zu schneiden, das wenigstens teilweise in die entsprechende Voraufwickelkammer (15) eingeführt ist,

c) Steuereinrichtungen (29, 30), um die Einführrollen (27a, 27b) zu drehen und nacheinander die Querschneide-Messer (25) zu betätigen, und

d) einem Stützschlitten (31, 43), der horizontal bewegbar ist, parallel zur Ebene, die die Achsen der Kammern (6) einer Reihe der Formungskammern (4, 5) aufweist und senkrecht zur Vorwärtsbewegung (F1) des thermoplastischen Bandes innerhalb der Formungseinrichtung bewegbar ist und die Querschneide-Messer (25), die Einführrollenpaare (27a, 27b) und die Steuereinrichtungen (29, 30) von dieser trägt, **dadurch gekennzeichnet, daß**

der Formungsblock (3) auf der Preßplatte (1) mittels des Stützblocks (11) ruht und dort auf normalerweise unbewegliche Art befestigt ist ;

der bewegbare Schlitten (31, 43) zwei Teilschlitten (31 und 43) aufweist, die hintereinander in Richtung einer Reihe der Voraufwickelkammern (15) angeordnet sind ;

der erste Teilschlitten (31), der in Betriebsstellung vollständig auf dem Stützblock (11) ruht und auf letzterem auf bewegbare Weise befestigt ist, weist eine vertikale Stützseitenwand (32) auf, die mit Zugangskerben (16) in die Voraufwickelkammern (15) versehen ist und einen Seitenbereich von jener begrenzt und stromauf jeder Kerbe (16) eines der Paare der Einführrollen (27a, 27b) und stromab der Kerbe (16) ein Querschneidemesser (25) aufweist, das mit einer Kante (26) der Kerbe (16) zusammenwirkt, und ein Steuerungsorgan (30, 40 bis 42) der Qerschneidemesser (25) sowie einen Übertragungsmechanismus (52) aufweist, der mit den Einführrollenpaaren (27a, 27b) zusammenwirkt ;

der zweite Teilschlitten (43) einerseits auf dem Boden (48), auf dem die Warmformungsanlage ruht, parallel zum ersten Teilschlitten (31) geführt ist, und geeignet ist, an eines (45) der Seitenenden des ersten Teilschlittens (31) angekuppelt zu sein, und andererseits einen Antriebsmotor (53) aufweist, der in seinen Bewegungen bezüglich des Rahmens (57) der Warmformungsanlage sicherstellt, und eine Drehsteuerungseinrichtung (49) aufweist, deren Ausgang mit dem Eingang des Übertragungsmechanismus (52) verbunden ist, und

der Stützblock (11), der auf bewegbare Weise auf der Preßplatte (1) montiert ist, geeignet ist, sich auf der Preßplatte (1) in eine horizontale Richtung parallel zur Bewegungsrichtung der beiden Teilschlitten (31, 43) zu bewegen, und mit Steuerungseinrichtungen (19) für die Bewegung des Anhebens und Absenkens des Abkühlungsorgans (8) versehen ist.

2. Warmformungsanlage nach Anspruch 1, **dadurch gekennzeichnet,** daß ein Bereich der Steuerungseinrichtungen (19) für die Bewegung des Anhebens und des Absenkens des Abkühlungsorgans (8) unterhalb des Stützblocks (11) vorgesehen ist und in einer Querausnehmung (14) der Preßplatte (1) aufgenommen ist.

3. Warmformungsanlage nach einem der Ansprüche 1 oder 2, **dadurch gekennzeichnet,** daß der Stützblock (11) zwei parallele Reihen von Voraufwickelkammern (15) aufweist und die vertikale Stützseitenwand (32) des ersten Teilschlittens (31) im horizontalen Querschnitt die Form eines U aufweist, und, mit seinen Schenkeln, die vertikalen Querseiten des Stützblocks (11) zwischen der Oberseite des letzteren und der Oberseite der Preßplatte (1) bedeckt.

4. Warmformungsanlage nach einem der Ansprüche 1 bis 3, **dadurch gekennzeichnet,** daß die vertikale Stützseitenwand (32) des ersten Teilschlittens (31) gebildet wird aus dem Boden eines U-Profils (33), dessen Seitenschenkel (34) sich horizontal erstrecken und sich über den Stützblock (11) hinaus erstrecken, und daß die vertikalen Rollenpaare (27a, 27b) von dem oberen Schenkel (34) des U-Profils (33) gestützt werden und sich auf demselben Niveau wie die Voraufwickelkammern (15) und die Messer (25) befinden, die auf der anderen Seite der vertikalen Seitenwand (32) angeordnet sind.

5. Warmformungsanlage nach einem der Ansprüche 1 bis 4, **dadurch gekennzeichnet,** daß die Messer (25) mit Hilfe einer Spitze (39) und einer kleinen Stange (40) betätigt werden, die von einer Stange (41) eines Stelltriebs (42) gesteuert wird, der auf dem ersten Teilschlitten (31) angebracht ist.

6. Warmformungsanlage nach einem der Ansprüche 1 bis 5, **dadurch gekennzeichnet,** daß der zweite Teilschlitten (43) gegenüber der Preßplatte (1) und des ersten Teilschlittens (31) einen Anschlag des Abstützens und Verriegelns (44) aufweist, der geeignet ist, am entsprechenden seitlichen Ende (45) des ersten Teilschlittens (31) angekuppelt zu werden.

7. Warmformungsanlage nach einem der Ansprüche 1 bis 6, **dadurch gekennzeichnet,** daß der Ausgang der Drehsteuerungseinrichtung (49), der an dem zweiten Teilschlitten (43) vorgesehen ist, mit dem Eingang des Getriebemechanismus (52) verbunden ist, der auf dem ersten Teilschlitten (31) vorgesehen ist, über eine Kardan- (50) und Teleskopwellen- (51) Verbindung.

8. Warmformungsanlage nach einem der Ansprüche 1 bis 7, **dadurch gekennzeichnet,** daß der Antriebsmotor (53) des zweiten Teilschlittens (43) als Ausgang eine Schraube bzw. Spindel (54) aufweist, die auf ein Schraubenrad (55) wirkt, das frei drehbeweglich ist, jedoch in Translationsrichtung mit dem zweiten Teilschlitten (43) verbunden ist, und das mit einer Gewindestange (56) zusammenwirkt, die sich parallel zu den Führungsschienen (47) des zweiten Teilschlittens (43) erstreckt und von dem ein Ende auf einem seitlichen Flansch (57) des Rahmens der Warmformungsanlage befestigt ist.

9. Warmformungsanlage nach einem der Ansprüche 1 bis 8, **dadurch gekennzeichnet,** daß die Steuerungseinrichtung (19) für das Anheben und Absenken der Abkülungsorgane (8) auf eine Steuerungstraverse (18) wirken und eine Reihe von pro Reihe von Abkühlungsorganen (8) zwei vertikale Führungsrohre (58) aufweisen, die mit den seitlichen unteren Enden des Stützblocks (11) verbunden sind, wobei zwei vertikale Stangen (59), die jede in einem der Führungsrohre (58) gleiten, an ihren oberen Enden mit der horizontalen Steuertraverse (18) verbunden sind und an ihrem unteren Ende eine Zahnstange (59a) aufweisen, die mit einem Zahnsektor (60) zusammenwirkt, der einerseits auf einer Achse (61), die mit dem Stützblock (11) verbunden ist, und andererseits auf der Stange eines Stelltriebs (62) angelenkt ist, dessen Zylinder ebenfalls an dem Block (11) angelenkt ist, wobei eine kleine Verbindungsstange (63) die beiden Zahnsektoren (60) verbindet, die jede mit einer der vertikalen Stangen (59) zusammenwirkt.

10. Warmformungsanlage nach einem der Ansprüche 1 bis 9, **dadurch gekennzeichnet,** daß der zweite Teilschnitt (43) so ausgelegt ist, daß er mehrere Spulen von Mutterband (64) aufnimmt, die jeweils auf einem Transportschlitten (65) mit frei beweglichen Rädern angebracht sind, die geeignet sind, auf dem Boden (66) des zweiten Teilschlittens (43) zu rollen und sich auszurichten, wobei sie durch eine Führung (67) geührt werden, die sich senkrecht zur Bewegungsrichtung der Teilschlitten (31 und 43) erstreckt.

11. Warmformungsanlage nach Anspruch 10, **dadurch gekennzeichnet,** daß jede Mutterbandspule (64) auf dem zweiten Teilschlitten (43) derart angeordnet ist, daß ihre Achse parallel zu den Führungsrädern (47) des zweiten Schlittens (43) verbleibt und daß die Spulenachsen (64) durch Spulenpaare (64) ausgerichtet sind.

12. Warmformungsanlage nach einem der Ansprüche 1 bis 11, **dadurch gekennzeichnet,** daß der zweite Teilschlitten (43) ein Chassis (68) aufweist, das die Längsschneideeinheit (69) wenigstens eines Mutternbandes (70) in einzelne Bänder (24) unterstützt, sowie eine Führungsrolle (72) aufweist mit einstellbarer Position für ein jedes individuelles Band (24), und die Umlenkrollen oder -stege (74, 75) für letztere aufweist.

13. Warmformungsanlage nach einem der Ansprüche 1 bis 12, **dadurch gekennzeichnet,** daß die Längsschneideeinheit (69) zwei Zylinder (76, 77) mit zu den Führungsschienen (47) des zweiten Teilschlittens (43) parallelen Achsen aufweist, wobei einer der beiden Zylinder ein Gegenmesserzylinder (76) ist, und der andere ein Zylinder mit ringförmigen Schneiden oder Klingen (77) ist, wobei die Klingen (78) mit den Gegenklingen (79) des Zylinders (76) zusammenwirken.

14. Warmformungsanlage nach einem der Ansprüche 1 bis 13, **dadurch gekennzeichnet,** daß der zweite Teilschlitten (43) eine Führungsvorrichtung (80) aufweist, die den Zylindern (76, 77) der Längsschneideeinheit (69) zugeordnet ist, die dazu bestimmt ist, die geschnittenen einzelnen Bänder (24) abwechselnd zur einen oder anderen Seite der Einheit (69) umzulenken, und einen Führungszylinder (81) aufweist, der mit dem Umfang des Zylinders der Gegenklingen (76) eine Durchtrittskerbe (82) begrenzt, wobei ein horizontales Führungsblech (63) stromauf des Führungszylinders (81) angeordnet ist und sich tangential zur oberen Mantellinie von diesem annähert, wobei ein weiteres Führungsblech (84) auf geneigte Weise oberhalb des Führungszylinders (81) angeordnet ist und sich mit seinem unteren Ende der Durchtrittskerbe (82) nähert sowie eine Mehrzahl von ringförmigen Nutenpaaren (85, 86) vorgesehen sind, von denen jedes Paar zwischen zwei benachrten Gegenklingen (79) des Gegenklingenzylinders (76) vorgesehen ist, und in die einerseits gegenüberliegend und stromab der Berührungszone der Klingen (78) in Gegenklingen (79) in jedem ungeraden Nutenpaar Ausklinkkrallen (87), die nach außen durch ein Führungsblech (88) verlängert sind, und andererseits, im oberen Bereich des Gegenklingenzylinders (76), in jedes ungerade Nutenpaar Ausklikkrallen (89) eingreifen, die nach außen durch ein Führungsblech (90) verlängert sind.

15. Warmformungsanlage nach Anspruch 14, **dadurch gekennzeichnet,** daß die Führungsvorrichtung (80) weiterhin mehrere Umlenkrollen (92, 93, 94, 95, 96) und mehrere Endlosbänder (91) aufweist, die um diese letzteren und den Gegenklingenzylinder (76) und den Klingenzylinder (77) sowie zwischen den Gegenzylinder (76) und dem Führungszylinder (81) verlaufen, wobei die Vorwärtstrums (91a) und Rückwärtstrum (91b) eines jeden Bandes (91) bei ihrem Weg zwischen dem Gegenklingenzylinder (76) und Klingenzylinder (77) seitlich versetzt sind, und daß diese Bänder (91) wenigstens teilweise in ringförmigen Kerben (97) geführt sind, die entweder auf dem Führungszylinder (81) oder auf den Zylindern (76 und 77) vorgesehen sind.

16. Warmformungsanlage nach einem der Ansprüche 1 bis 15, **dadurch gekennzeichhnet,** daß der zweite Teilschlitten (43) eine Nachfolgevorrichtung (98) aufweist, die geeignet ist, die Weglänge eines jeden einzelnen Bandes (24) zwischen der Längsschneideeinheit (69) und den entsprechenden Einführrollenpaaren (27a, 27b), die auf dem ersten Teilschlitten (31) vorgesehen sind, konstant zu halten.

17. Warmformungsanlage nach Anspruch 16, **dadurch gekennzeichnet,** daß die Nachfolgevorrichtung (98) aufweist :
eine hin- und herbewegliche Plattform (102), die nahe ihrem äußeren Rand auf einer horizontalen Achse (103) angelenkt ist, die von dem zweiten Teilschlitten (43) getragen wird, wobei die Achse parallel zu den Führungsschienen (47) des letzteren verläuft und mit der horizontalen Achse der Umlenkstange (72) übereinstimmt, und die nahe ihrem Innenrand (102a) sich in der Verlängerung einer Reihe von Formungskammern (4 oder 5) befindet, und, in Horizontalstellung der Plattform (102), ungefähr auf halber Höhe zwischen der oberen und der unteren Stellung der Einführungsrollenpaare (27a, 27b) gleich viel Umlenkrollen (73) aufweist, wie einzelne Bänder (24) pro Reihe der Kammern (4 oder 5) vorhanden sind, wobei die Achse einer jeden der Umlenkrollen (73) senkrecht zur hin- und herbewegbaren Plattform (102) verläuft sowie ein Verbindungsgestänge (104) aufweist, das die Plattform (102) mit dem Formungsblock (3) verbindet, um letzterer die Bewegung des Anhebens und Hinablassens des Formungsblockes (3) aufzuzwingen.

18. Warmformungsanlage nach einem der Ansprüche 16 und 17, **dadurch gekennzeichnet,** daß die Nachfolgevorrichtung (98) eine Führungsrolle mit einstellbarer Position (72) aufweist, die am Ende eines doppelten Hebels (99) angeordnet ist, dessen anderes Ende ein Gegengewicht (100) aufweist, das einem Erfassungselement (101) zugeordnet ist, das auf der Abfallwegseite des Gegengewichts (100) vorgesehen ist.

## Claims

1. Installation for the simultaneous thermoforming of at least one row of containers in thermoplastic material, in which each one of the containers are provided with a decorative banderole (13), installation of the type comprising :
   — on the one hand, a thermoforming station through which is fed step-by-step a thermoforming band pre-heated to its forming temperature, and which comprises, under the path of said thermoplastic band, a molding unit (3) equipped with a plurality of vertical cylindrical forming chambers (6) disposed in at least one transversal row (4, 5) having at its lower end, an opening adapted to be closed off by a bottom element (7) movable with respect to the molding unit (3), which rests on a press table (1), vertically movable between a high position called thermoforming position and a low position called container-stripping position, and
— on the other hand, a device for cutting, preforming and transferring the banderoles (13) in the forming chambers (6) of the forming unit (3), said device comprising, from upstream to downstream, in the moving direction of the banderoles (13) :
— a roller supporting a reel of master band (64), said roller being mounted on bearings on either side of said reel,
— a cutting unit (69) for longitudinally cutting the master-band (70, 71) into individual bands (24), said unit being mounted on a supporting frame (43) laterally spaced from the molding unit (3),
— a pre-winding unit (12) for pre-winding the decorative banderoles (13), said unit presenting, inside a supporting unit (11) which is placed under the molding unit (3) :
a) a plurality of vertical cylindrical pre-winding chambers (15), each one in alignment with one of the forming chambers (6),
b) a shaping member (8) having a rod (9) which traverses the pre-winding chamber (15) and forms with the vertical wall thereof a narrow annular pre-winding and guiding chamber, and is adapted to penetrate into the forming chamber (6) through the bottom thereof and to apply said banderole (13) against the vertical side wall of said forming chamber,
c) a plurality of vertical access slots (16), each slot being provided in a lateral wall (32) defining part of the pre-winding chambers (15) and issuing in one of said pre-winding chambers, and
d) a transfer member (17) provided in the pre-winding and guiding annular chamber (15) and adapted to support the banderole (13) until the latter has been transferred to the forming chamber (6), and
— a banderole (13) introduction and transverse cutting (23) unit comprising :
a) a plurality of pairs of introduction rollers (27a, 27b) adapted to drive the individual band (24) gripped between its two rollers (27a, 27b) at a pace equal to the length of a banderole (13),
b) a plurality of knives (25), each one of which is adapted to cooperate with a counter-blade (26) for transversely cutting the back end of the banderole (13) introduced at least partly into the corresponding pre-winding chamber (15),
c) control means (29, 30) for turning the introduction rollers (27a, 27b), and sequentially actuating the transverse cutting knives (25), and
d) a supporting carriage (31, 43), movable horizontally parallel to the plane containing the axes of the chambers (6) of one row of forming chambers (4, 5), and perpendicular to the thermoplastic band feeding direction (F1), at a right angle with the forming station, said carriage carrying the transverse cutting knives (25), the pairs of introduction rollers (27a, 27b) and their control means (29, 30), installation characterized in that :
— the molding unit (3) rests on the press table (1) via the supporting unit (11) and is fixed thereon in normally unremovable fashion ;
— the movable carriage (31, 43) comprises two partial carriages (31 and 43) placed one behind the other following the direction of a row of pre-winding chambers (15) ;
— the first partial carriage (31) rests, in operative position, entirely on the supporting unit (11) and is removably fixed on the latter and presents a vertical supporting wall (32) which is equipped with slots (16) giving access to the pre-winding chambers (15), defines a lateral part of said chambers, and comprises, upstream of each slot (16), one of the pairs of introduction rollers (27a, 27b), and downstream of said slot (16), a transverse cutting knife (25) which cooperates with an edge (26) of said slot (16), and means (30, 40 to 42) for controlling said transverse cutting knives (25) as well as a transmission mechanism (52) cooperating with said pairs of introduction rollers (27a, 27b) ;
— the second partial carriage (43), on the one hand, is guided on the surface (48) on which rests the thermoforming installation in parallel to the first partial carriage (31), and, is adapted to be coupled to one (45) of the lateral ends of the first partial carriage (31), and, on the'other hand, comprises a driving motor (53) ensuring displacement of said second partial carriage with respect to the frame (57) of the thermoforming installation, and rotation control means (49) whose output is connected to the input of the transmission mechanism (52), and
— the supporting unit (11) is removably mounted on the press table (1), is adapted to move on said press table (1) in a horizontal direction parallel to the moving direction of the two partial carriages (31, 43), and is equipped with means (19) controlling the upward and downward movement of the shaping member (8).

2. Thermoforming installation according to claim 1, characterized in that part of the means (19) controlling the upward and downward movements of the shaping member (8) is situated under the supporting unit (11) and is housed inside a transversal recess (14) of the press table (1).

3. Thermoforming installation according to one of claims 1 and 2, characterized in that the supporting unit (11) comprises two parallel rows of pre-winding chambers (15) and the vertical supporting wall (32) of the first partial carriage (31) has a U-shaped horizontal cross-section, covering with its flanged parts the vertical transversal faces of the supporting unit (11) between the upper face of the latter and the upper face of the press table (1).

4. Thermoforming installation according to one of claims 1 to 3, characterized in that the vertical supporting wall (32) of the first partial carriage (31) is constituted by the base of a U-section (33) of which the lateral flanges (34) extend horizontally away from the supporting unit (11) and in that the pairs of vertical rollers (27a, 27b) are supported by the upper flange (34) of the U-section (33) and are situated on the same level as the pre-winding chambers (15) and the knives (25) situated on the other side of said vertical wall (32).

5. Thermoforming installation according to one of claims 1 to 3, characterized in that the knives (25) are actuated by way of a knob (39) and of a shaft (40) controlled by the rod (41) of a jack (42) mounted on the first partial carriage (31).

6. Thermoforming installation according to one of claims 1 to 5, characterized in that the second partial carriage (43) comprises, opposite the press table (1) and the first partial carriage (31), a support and lock abutment (44) adapted to be coupled to the corresponding lateral end (45) of the first partial carriage (31).

7. Thermoforming installation according to one of claims 1 to 6, characterized in that the output of the rotation control means (49) provided on. the second partial carriage (43) is connected to the input of the transmission mechanism (52) provided on the first partial carriage (31), via a universal drive (50) and telescopic shafts (51) connection.

8. Thermoforming installation according to one of claims 1 to 7, characterized in that the motor (53) driving the second partial carriage (43) comprises as output a worm (54) which actuates a worm wheel (55) which is free in rotation but fast in translation with said second partial carriage (43) and which cooperates with a threaded and (56) extending in parallel to the guiding rails (47) of the second partial carriage (43) and of which one end is fixed on a lateral end-plate (57) of the frame of the thermoforming installation.

9. Thermoforming installation according to one of claims 1 to 8, characterized in that the means (19) controlling the upward and downward movement of the shaping members (8) actuate a control crossbar (18) and comprise, for every row of shaping members (8), two vertical guiding tubes (58) fast with the lower lateral ends of the support unit (11), two vertical rods (59), each one sliding in one of said guiding tubes (58), said rods being joined by their upper end to the horizontal control crossbar (18) and being provided, at their lower end, with a rack (59a) which cooperates with a toothed sector (60) articulated, on the one hand, on a pin (61) fast with the supporting unit (11) and, on the other hand, on the rod of a jack (62) whose cylinder is likewise articulated in said unit (11), a connecting rod (63) linking the two toothed sectors (60), each one of which cooperates with one of the two vertical rods (69).

10. Thermoforming installation according to one of claims 1 to 9, characterized in that the second partial carriage (43) is designed to receive a plurality of reels of master-band (64), each reel being mounted on a free-wheeled transporting trolley (65), which is able to roll and self-orientable on the floor (66) of the second partial carriage (43) while being guided by a guiding system (67) extending perpendicularly to the partial carriages (31 and 43) moving direction.

11. Thermoforming installation according to claim 10, characterized in that each reel of master-band (64) is placed on the second partial carriage (43) in such a way that the axis of the former is parallel to the guiding rails (47) of said second carriage (43), and the axes of the reels (64) are aligned with every pair of reels (64).

12. Thermoforming installation according to one of claims 1 to 11, characterized in that the second partial carriage (43) comprises a chassis (68) supporting the unit (69) provided for the longitudinal cutting of at least one master-band (70) into individual bands (24) as well as a guiding roller, adjustable in position (72) for every individual band (24), and return rollers and bars (74, 75) for the latter.

13. Thermoforming installation according to one of claims 1 to 12, characterized in that the longitudinal cutting unit (69) comprises two cylinders (76, 77), of axes parallel to the guiding rails (47) of the second partial carriage (43), one of the two cylinders being a cylinder with counter-blades (76) and the other cylinder, a cylinder with annular blades (77), said blades (78) cooperating with the counter-blades (79) of the cylinder (76).

14. Thermoforming installation according to one of claims 1 to 13, characterized in that the second partial carriage (43) comprises a guiding device (80) coupled to the cylinders (76, 77) of the longitudinal cutting unit (69), designed to return the cut individual bands (24) alternately towards one side and the other of said unit (69), and comprising a guiding cylinder (81) defining a passage slot (82) with the periphery of the counter-blade cylinder (81), a horizontal guiding plate placed upstream of the guiding cylinder and approaches tangentially the upper generatrix thereof, another guiding plate (84), placed at an angle above the guiding cylinder (81) and, by its lower end, approaching the passage slot (82), as well as a plurality of pairs of annular grooves (85, 86), each pair being provided between two adjacent counter-blades (79) of the counter-blade cylinder (76), in which grooves are engaged, on the one hand, opposite and downstream of the contact zone between blades (78) and counter-blades (79) in every odd pair of grooves, separating claws (87) which are extended outwardly by a guiding plate (88) and, on the other hand, at the upper part of the counter-blade cylinder (76), in each even pair of grooves, separating claws (89) extended outwardly by a guiding plate (90).

15. Thermoforming installation according to claim 14, characterized in that the guiding device (80) further comprises a plurality of return rollers (92, 93, 94, 95, 96) and a plurality of endless belts (91) passing around said rollers and around the counter-blade (76) and blade (77) cylinders, as well as between the counter-blade cylinder (76) and the guiding cylinder (81), in that the delivery end (91a) and return end (91b) of each belt (91) are shifted laterally when passing between the counter-blade (76) and blade (77) cylinders, and said belts (91) are guided at least partly in annular grooves (97) provided either on the guiding cylinder (81) or on the cylinders (76 and 77).

16. Thermoforming installation according to one of claims 1 to 15, characterized in that the second partial carriage (43) comprises a follower device (98) for keeping constant the length of the path of each individual band (24) between the longitudinal cutting unit (69) and the corresponding pair of introduction rollers (27a, 27b) provided on the first partial carriage (31).

17. Thermoforming installation according to claim 16, characterized in that the follower device (98) comprises : a pivoting platform (102) which, close to its outer edge, is pivotally mounted on a horizontal pivot pin (103) carried by the second partial carriage (43), which pivot pin is parallel to the guiding rails (47) of said carriage and coincides with the horizontal axis of the return bar (75), said pivoting platform having, close to its inner edge (102a) situated in extension of a row of forming chambers (4 or 5) and, when the platform (102) is in horizontal position, at approximately mid-distance between the high position and the low position of the pairs of introduction rollers (27a, 27b), as many return rollers (73) as there are individual bands (24) per row of chambers (4 or 5), the axis of each of said return rollers (73) being perpendicular to the pivoting platform (102), as well as a connecting rod (104) linking said platform (102) to the molding unit (3) in order to impart to the latter the upward and downward movements of said molding unit (3).

18. Thermoforming installation according to one of claims 16 and 17, characterized in that the follower device (98) comprises a guiding roller, of adjustable position (72), mounted on the end of a double lever (99), of which the other end carries a counter-weight (100) operationally coupled to detection means (101) provided on the side of the dropping path of said counter-weight (100).

EP 0 320 392 B1

Fig. 1

2  1  2

$F_1$  IV

31

45

5

38

4

43

6  3,11

44

20

46

2

IV

2

Fig. 2

Fig. 3

EP 0 320 392 B1

Fig-4

Fig.5

27b

25

28b

39

40

30

31

1

36

21

11

14

Fig.6

EP 0 320 392 B1

Fig.7

EP 0 320 392 B1

Fig.8

Fig.9

Fig 10

EP 0 320 392 B1

Fig 11

Fig.12

Fig.13